## Europäisches Patentamt
## European Patent Office
## Office européen des brevets

(11) Publication number: **0 021 550**
**A1**

(12) # EUROPEAN PATENT APPLICATION

(21) Application number: **80200629.6**

(22) Date of filing: **01.07.80**

(51) Int. Cl.³: **H 02 G 15/10**
**H 01 R 4/24**

(30) Priority: **03.07.79 NL 7905180**

(43) Date of publication of application:
**07.01.81 Bulletin 81/1**

(84) Designated Contracting States:
**BE DE FR GB IT LU NL SE**

(71) Applicant: **N.V. ELECTRICITEITS-MAATSCHAPPIJ IJSSELCENTRALE**
**Zeven Alleetjes 1**
**NL-8011 CV Zwolle(NL)**

(72) Inventor: **Ypma, Harmen Ype**
**27 Nagelerstraat**
**Emmeloord(NL)**

(74) Representative: **Hoorweg, Petrus Nicolaas et al,**
**OCTROOIBUREAU ARNOLD & SIEDSMA Sweelinckplein 1**
**NL-2517 GK The Hague(NL)**

(54) Cable jointbox.

(57) A cable joint box for establishing a connection between a main cable (5) and a branch cable (7) in electric mains, said box comprising a housing formed by at least two dish-shaped parts (1,3) and enclosing at least one stool carrying a main cable (5) and the associated branch cable (7), said stool having a contact member (15) movably arranged therein for interconnecting the main and branch cables, (5,7) said dish-shaped parts (1,3) have stop members (9) for accomodating each stool with narrow fit between said parts, the contact member (15) being provided with a shank (17) projecting through a fitting opening (19) out of the housing at least in the electrically contact-less situation. The shank (17) is adapted to be pressed to the inside for establishing the desired connection between the main and branch cable (5,7).

./....

Croydon Printing Company Ltd.

FIG.1

N.V. Electriciteits-Maatschappij Ijsselcentrale
of Zwolle, The Netherlands.

Cable joint box

---------------------------------------------------------------------

The invention relates to a cable joint box for establishing a connection between a main cable and a branch cable in electric mains, said box comprising a housing formed by at least two dish-shaped parts and enclosing at least one stool carrying a main cable and the associated branch cable, said stool having a contact member movably arranged therein for interconnecting the main and branch cables.

Hitherto branchings have frequently been made with the aid of a ring formed by a plurality of stools. The stools are clamped together by bolts, the resultant ring compensating for the expansion and shrinkage of the cores. The ring comprises branching members presented in two constructions, that is to say, a milled clamp in which a milled pin can be screwed across the core insulation into the core, or a clamp in which a metal pin is pressed through the core insulation into the core. Both constructions have the disadvantage that the connection depends upon the electrician establishing the same. Due to the annular structure the insulation of the main cores is locally broken up at one cross-section of the cable. This involves the risk of flash-over because at this place there is great chance of air occlusions. Moreover, during the mounting operation the electrician may come into contact with the electric current.

The invention has for its object to obviate the aforesaid disadvantages.

The cable joint box according to the invention is distinguished in that the dish-shaped parts have stop members for accommodating each stool with narrow fit between said parts, the contact member being provided with a shank projecting through a fitting opening out of the housing at least in the electrically contact-less situation.

Since the plurality of stools in a cable joint box frequently corresponds with the number of cores in the main cable, the stools will be arranged side by side in the housing, whilst the connections will be established at different, neighbouring sections of the main cable. This reduces the risk of flash-over. Moreover, the whole body can be completely mounted before the connection between main and branch cables is made. During the mounting operation the shank of the contact member will project out of the housing so that after mounting the electrician need only pass the shank so the inside for establishing the desired connection. By the length over which the shank is pressed into the housing the electrician can assess in a simple manner whether adequate contact is made.

The forces produced by expansion and shrinkage of the cable can be absorbed by the housing.

In one embodiment the contact member has on the side remote from the shank two parallel, U-shaped slots for accommodating the main core and the branch core respectively.

With such an embodiment it is not necessary to impart a rotary movement to the contact member as in the conventional contact screws or the like, since the electrician need only hammerdown the shank, for the slots of the U-shaped contact member to be pressed against the cores previously arranged in the stool.

In a futher embodiment the contact member has the shape of a blade, which has a cutting edge at the end remote from the shank and which is connected through an elastic conductor with a clamp for the branch core. Also in this embodiment the electrician need only strike the shank with a hammer so that the knife lik end cuts through the insulation of the main core.

In order to obtain a simple indication for the electrician to be sure of an adequately established connection
the length of the shank portion projecting out of the housing
is substantially equal to the thickness of the main core.
Therefore, in this embodiment the shank portion
has to be hammered in down to the outer sheath of the housing.

The invention will be described more fully herinbelow
with reference to a few embodiments. The drawing shows in

Figure 1 a perspective view, a wall portion of the
housing of the cable joint box being partly broken away in
a first embodiment,

Figure 2 a sectional view taken on the line II-II

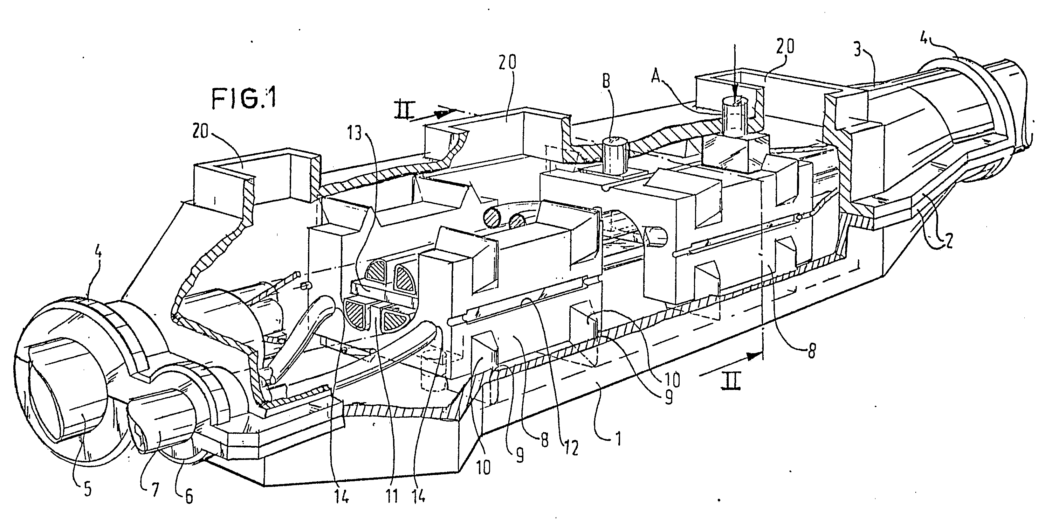

in figure 1,

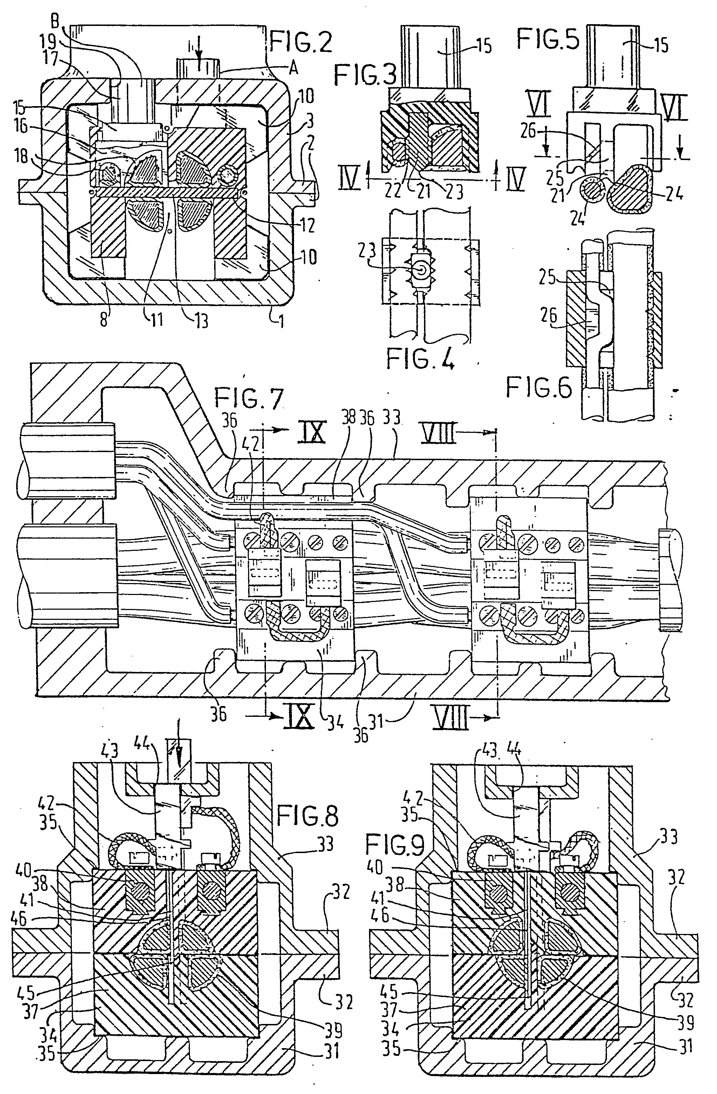

Figure 3 a sectional view of an alternative contact
member suitable for use in the cable joint box of figure 1,

Figure 4 an elevational view taken on the line
IV-IV in figure 3,

Figure 5 an elevational view like figure 3 of a
further embodiment of the contact member,

Figure 6 a sectional view taken on the line VI-VI in
figure 5,

Figure 7 a longitudinal sectional view of a cable
joint box in a different embodiment,

Figures 8 and 9 sectional views taken on the line
VIII-VIII and IX-IX in figure 7.

In the embodiments shown the cable joint box is
formed by longitudinal flanges 2. At both ends of the housing
formed by the dishes 1 and 3 a stub 4 is formed for passing
the main cable 5, shilst at the front end in figure 1 a
side stub 6 is formed for passing the branch cable 7.

In the embodiments shown every two stools are united
into a single block 8, the blocks being accommodated with
narrow fit between the dishes of the housing. For this purpose
the housing has stops 9, which co-operate in the embodiment
shown in figure 1 with ridges 10 on the block 8. In this
way each block 8 is accurately localised both in the longitudinal
and the transverse direction, so that the block is firmly
fastened to the housing 1.

Each block 8 has a U-shaped form (see also figure
2), the bottom of which receives individually two cores of the four core main cable. The bottom of the U is provided with a separating ridge 11 and through the limbs of the U is passed via a slot 12 a separating and supporting partition 13.

In this manner every block 8 firmly holds two insulated cores of the main cable.

The two further insulated cores can be passed through the remaining space between the limbs of the U. Furthermore each block 8 has two holes 14 extending parallel to the partition 11. Through these holes 14 the cores of the branch cable 7 have to be passed.

Each stool of the block 8 is associated with a contact member which is transversely slidable to the longitudinal direction of the cores in each stool (see figure 2). The contact member 15 shown in figures 1 and 2 comprises a body 16 of conductive material, which joins a shank 17 of non-conductive material. The body 16 of conductive material has on the side remote from the shank 17 two U-shaped slots 18, into each of which fits the branch core and main core respectively. Each slot 18 has on the inner side a plurality of cutting edges which cut through the insulation of the cores in order to establish a connection.

According to the invention the shank 17 extends through an opening 19 in the wall of the housing and in the situation without electric contact the shank 17 projects above the top wall of the housing: see at A in figures 1 and 2.

The cable joint box is mounted as follows. After the removal of the outer insulation of the main cable 5 and the branch cable 7 the four still insulated cores of the main and branch cables are exposed. In each block 8 two cores of the main cable are arranged at the bottom of the U, after which the partition 13 is inserted via the slots 11 into the block 8. Subsequently the contact members 15 can be slipped into each stool, by which, however, no contact with the electrically conductive body 16 and the cores is established. Then the dishes 1 and 2 can be arranged in place, the blocks 8 being placed in the housing in relatively inverted positions. The ridges 10 will accurately co-operate with the stops 9 in the dishes so that the blocks are accurately positioned. The holes 19 then register with the shanks 17 of the contact members 15, said shanks 17 projecting out of the housing. After the dishes 1 and 2 are fastened to one another, the electrician strikes the shank 17 with a hammer, as a result of which the desired connection is established. The head face of the shank 17 will then register with the outer face of the upper dish 3: see at B in figures 1 and 2. Finally, through the openings 20 in the upper dish 3 a conventional synthetic filling can be cast so that the desired insulating and safeguard are ensured and, in addition, the contact members 15 are fixed in their contact positions.

Figures 3 and 4 show an alternative embodiment of a contact member 15 being made from non-conductive material. Only the partition 21 between the U-shaped channels for receiving the cores is made from conductive material and provided on both sides with cutting edges 22 by which the insulation of the cores can be cut. On the lower side the partition 21 has a tip-shaped end 23 for readily passing the partition 21 between the cores.

Figures 5 and 6 show a different embodiment of the contact member 15, in which the partition between the U-shaped channels has two knife edges 24 on the lower side, which will cut off the insulation of the cores. The partition 21 has an uninterrupted hole 25 between the two channels.

The bottom of the left hand channel has a surface sloping down towards the right hand channel 26 so that in the mounted state, after removal of the insulation by the edges 24 the branch cable comes into contact by the inclined bottom 26 via the opening 25 with the main core (see figure 6).

Figures 7 to 9 show an alternative embodiment of the cable jointbox. Also this joint box comprises a lower dish 31, which can be connected with the upper dish 33 by means of longitudinal flanges 32. The blocks 34 formed by two stools have a rectangular cross-section, the corners fitting in stop means 35, whilst in the longitudinal direction the blocks are fixed in place by stop ridges 36 in the upper and lower dishes of the housing.

Each block 34 comprises two relatively matching parts 37 and 38, whose facing separating surfaces have appropriate recesses 39 for the main cores of the main cable. Furthermore, the upper block 38 is provided with connecting clamps 40 for the cores of the branch cable.

The contact member 41 of this embodiment has the shape of a blade made fron conductive material and being connected through a flexible conductor 42 with the clamp 40. The blade 41 is connected with a shank 43 of non-conductive material, which has to be passed in the mounted state through a hole 44 in the top wall of the upper dish 33.

The blade 41 has a cutting edge 45 on the side remote from the shank 43 and the side surface of the blade 41 is provided with contact ribs 46.

From figures 8 and 9 it is apparent that the recesses 39 of the left-hand and right-hand block 34 respectively are relatively off-set so that upon the insertion of the blade shaped contact members 41 the desired core can be touched. In figure 8 the two upper cores and in figure 9 the two lower cores are contacted.

The cable joint box of figures 7-9 is mounted in the manner described with reference to the embodiments shown in figures 1-6. It should be noted that in the latter embodiment the four shanks 43 project above the upper dish, which facilitates access for the electrician. Also in this case the electrician need only hammer the shanks 43 down to the top wall of the upper dish.

The invention is not limited to the embodiments described above. For example, the stools may be accommodated as separate elements in the housing, whilst in addition other structures of the contact members are possible.

0021550

WHAT IS CLAIMED IS:

1. A cable joint box for establishing a connection between a main cable and a branch cable in electric mains, said box comprising a housing formed by at least two dish-shaped parts and enclosing at least one stool carrying a main cable and an associated branch cable, said stool having a contact member movable therein for inter connecting the main and branch cables characterized in that the dish-shaped parts have stop members for accommodating with narrow fit each stool between said parts, the contact member being provided with a shank which projects through a fitting opening out of the housing at least in the situation in which no electric contact is established.

2. A cable joint box as claimed in claim 1 characterized in that the contact member is provided on the said remote from the shank with two parallel, U-shaped slots for receiving the main and branch cores respectively.

3. A cable joint box as claimed in claims 1 and 2 characterized in that the separation partition between the slots has a knife-like edge and a hole below the latter and in that the U-shaped slot receiving the branch core has a bottom inclined towards the other slot.

4. A cable joint box as claimed in claim 1 characterized in that the contact member has the shape of a blade having a cutting edge at the ends remote from the shank, said blade being connected through an elastic conductor with a clamp for the branch core.

5. A cable joint box as claimed in anyone of the preceeding claims, characterized in that the length of the shank portion projecting out of the housing substantially corresponds to the thickness of the main core.

FIG.1

FIG.2

FIG.3

FIG.5

FIG.4

FIG.6

FIG.7

FIG.8

FIG.9

0021550

European Patent Office

**EUROPEAN SEARCH REPORT**

Application number

EP 80 20 0629

| Category | Citation of document with indication, where appropriate, of relevant passages | Relevant to claim |
|---|---|---|
| | <u>DE - C - 731 079</u> (G.M. VERMEER)<br>* Page 2, lines 59-122; page 3 * | 1 |
| | <u>FR - A - 2 017 331</u> (SCHIFFMANN)<br>* Page 3, lines 26-39; pages 4, 5 * | 1 |
| | <u>FR - A - 2 388 430</u> (LOVINK)<br>* Page 3, lines 19-37; page 4, lines 1-26 * | 1 |
| | <u>US - A - 2 389 255</u> (GENERAL CABLE)<br>* Page 1, right-hand column, lines 12-55; page 2, left-hand column, right-hand column, lines 1-11 * | 1 |
| | <u>US - A - 3 890 029</u> (THOMAS & BETTS)<br>* Column 4, lines 6-68; columns 5-7; column 8, lines 1-47 * | 1,2 |
| | <u>US - A - 4 148 539</u> (WESTERN EL.)<br>* Column 8, lines 34-68; columns 9,10; column 11, lines 1-60 * | 1 |
| | <u>FR - A - 1 525 673</u> (HUGHES AIRCRAFT)<br>* Page 2, left-hand column, paragraphs 8,9; right-hand column; page 3, left-hand column, paragraphs 1,2 * | 1 |

**DOCUMENTS CONSIDERED TO BE RELEVANT**

CLASSIFICATION OF THE APPLICATION (Int. Cl.³)

H 02 G 15/10
H 01 R 4/24

TECHNICAL FIELDS SEARCHED (Int. Cl.³)

H 02 G 15/10
            15/08
H 01 R 4/24
            9/03

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| The Hague | 30-09-1980 | LOMMEL |

EPO Form 1503.1 06.78

0021550

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| | US - A - 3 689 867 (JENNER)<br><br>* Column 3, lines 55-68; columns 4,5; column 6, lines 1-28 *<br><br>---- | 1 | |
| | | | TECHNICAL FIELDS SEARCHED (Int. Cl. 3) : |